# FASCICULE DE BREVET EUROPEEN

(11) **EP 0 432 066 B1**
(45) Date de publication et mention de la délivrance du brevet: **28.07.1993**
(21) Numéro de dépôt: 90420524.2
(22) Date de dépôt: 04.12.1990
(51) Int. Cl.: G01N 3/08, G01N 3/20

(54) **Banc de traction et de flexion**
Zug- und Biegungsgestell
Traction and flexion bench

(30) Priorité: 04.12.1989 FR 8916091
(43) Date de publication de la demande: 12.06.1991
(73) Titulaire: DELTALAB S.A., F-38340 Voreppe (FR)
(72) Inventeur: Boyer, Jean-Claude, F-69100 Villeurbanne (FR)
(74) Mandataire: de Beaumont, Michel

(56) Documents cités:
- DE-U- 1 942 736
- INDUSTRIAL LABORATORY. vol. 44, no. 10, octobre 1978, NEW YORK US pages 1455 - 1456; V.A. LOKSHIN ET AL.: "Device for mechanically testing curved specimens"
- SOVIET INVENTIONS ILLUSTRATED, Derwent Publ. Ltd Semaine 84/06, Abrégé no. 84-036062/06, M23, 21 mars 1984 & SU-A-1010-503

## Description

Le dispositif qui fait l'objet de l'invention est un banc de traction et de flexion qui concerne la mesure de caractéristiques mécaniques d'éprouvettes en métaux ou alliages métalliques, matières plastiques, matériaux composites ou autres matériaux et la déformation de poutres simples.

On connaît de très nombreux dispositifs permettant de faire des mesures de traction ou de flexion sur toutes sortes d'éprouvettes métalliques ou non. Les dispositifs sont le plus souvent adaptés à des travaux de recherche ou, au contraire, à la réalisation de contrôles industriels en série. Ils conviennent en général assez mal à la réalisation d'expériences dans un but didactique à cause de leur relative complexité qui ne facilite pas leur mise en oeuvre par des élèves. De plus, ces dispositifs conviennent mal pour faire apparaître les mécanismes de base qui régissent la déformation des métaux ou autres matériaux, de façon claire. Enfin, dans pratiquement tous les cas, ces dispositifs sont trop coûteux pour les réserver à des expériences élémentaires, réalisées uniquement pour l'enseignement de notions de base.

On a recherché la possibilité de réaliser un dispositif, permettant d'effectuer des essais de traction ou de flexion, de structure simple et peu coûteux, dépourvu de tout mécanisme complexe, apte à fonctionner sans moyen moteur, aussi bien pour déformer les éprouvettes que pour suivre cette déformation. On a recherché en même temps, la possibilité de réaliser un dispositif permettant de faire des mesures avec une précision suffisante pour pouvoir exploiter celles-ci de façon valable.

Le dispositif est un banc qui permet d'effectuer des essais mécaniques de traction ou de flexion sur différents types d'éprouvettes normalisées ou non. Ce dispositif permet d'appliquer des gammes de charges dans un large domaine, afin de mesurer la variation d'au moins une caractéristique dimensionnelle. Ce banc comporte un châssis triangulaire dont l'un des trois côtés est muni d'une poutre dynamométrique qui lui est parallèle. Cette poutre est reliée au châssis à chacune de ses extrémités. En son milieu, elle est reliée, par l'intermédiaire d'un moyen de traction, à une tête de traction qui permet d'exercer une force de traction réglable suivant un axe situé dans le plan du châssis et sensiblement perpendiculaire à la poutre dynamométrique. La tête de traction comporte des moyens de liaison avec une éprouvette de traction ou de flexion elle-même reliée de façon directe ou indirecte au châssis. On détermine la force de traction appliquée à l'éprouvette par mesure de la flexion de la poutre dynamométrique.

Le moyen de traction, qui permet de tirer sur la tête de traction reliée à l'éprouvette en prenant appui sur le milieu de la poutre dynamométrique est, de préférence, un système vis-écrou commandé par une manivelle.

Dans le cas d'une éprouvette pour essai de traction, l'une des deux extrémités de cette éprouvette est reliée à la tête de traction et l'autre à une tête de retenue raccordée au sommet du châssis opposé au côté qui comporte la poutre dynamométrique. Avantageusement, les éprouvettes de traction sont munies de têtes aptes à se raccorder à la tête de traction ou à la tête de retenue au moyen d'une goupille.
Dans le cas des essais de flexion, on utilise une éprouvette allongée, disposée parallèlement à la poutre dynamométrique, pour intersecter les côtés du châssis adjacents à celui qui comporte cette poutre. La tête de traction saisit, de façon directe ou indirecte, l'éprouvette à son point d'intersection avec la droite perpendiculaire à la poutre dynamométrique et issue du sommet opposé du châssis. Cette éprouvette est calée sur les deux côtés du châssis qu'elle intersecte par des butées disposées de façon à assurer son appui au cours de l'essai de flexion. Avantageusement, chaque côté du châssis est constitué par deux fers plats disposés parallèlement l'un au-dessus de l'autre et maintenus à la distance voulue par des entretoises. Il est ainsi possible de loger dans un côté du châssis la poutre dynamométrique et d'engager les extrémités des éprouvettes de flexion entre les deux fers plats de chacun des côtés adjacents. Ceci permet, en particulier, d'assurer facilement le calage des éprouvettes de flexion par au moins une paire de plots formant butée. Le châssis est de préférence un triangle équilatéral. Cependant, pour certaines utilisations, on peut avoir besoin d'utiliser un châssis dont le côté qui comporte la poutre dynamométrique a une dimension différente de celle des deux autres côtés.

La mesure de flexion de la poutre dynamométrique est de préférence effectuée par un comparateur mécanique qui prend appui sur le châssis. Les mesures d'allongement de l'éprouvette de traction sont aussi effectuées par des comparateurs mécaniques qui mesurent le déplacement des têtes des éprouvettes en prenant appui sur le châssis. La mesure de la flexion de l'éprouvette de flexion est également effectuée au moyen d'un comparateur mécanique.

Pour certaines applications, il est possible de substituer aux comparateurs mécaniques d'autres moyens de mesure. C'est ainsi que la flexion de la poutre dynamométrique peut être mesurée au moyen de jauges de déformation ou encore par d'autres moyens.

Les exemples et les figures ci-après décrivent, de façon non limitative, des modes particuliers de réalisation du dispositif suivant l'invention.

La figure 1 est une vue schématique, de dessus, du dispositif suivant l'invention aménagé en banc de traction.

La figure 2 est une vue de côté, agrandie et plus détaillée, suivant le plan perpendiculaire à celui de la figure 1 qui contient l'axe de traction X1-X1, d'une partie du dispositif.

La figure 3 est une vue schématique, de dessus, du dispositif suivant l'invention aménagé en banc de flexion.

La figure 4 est une vue de côté suivant la flèche F de la tige de liaison de la figure 3.

La figure 5 est une vue de dessus de l'éprouvette 16 de la figure 1.

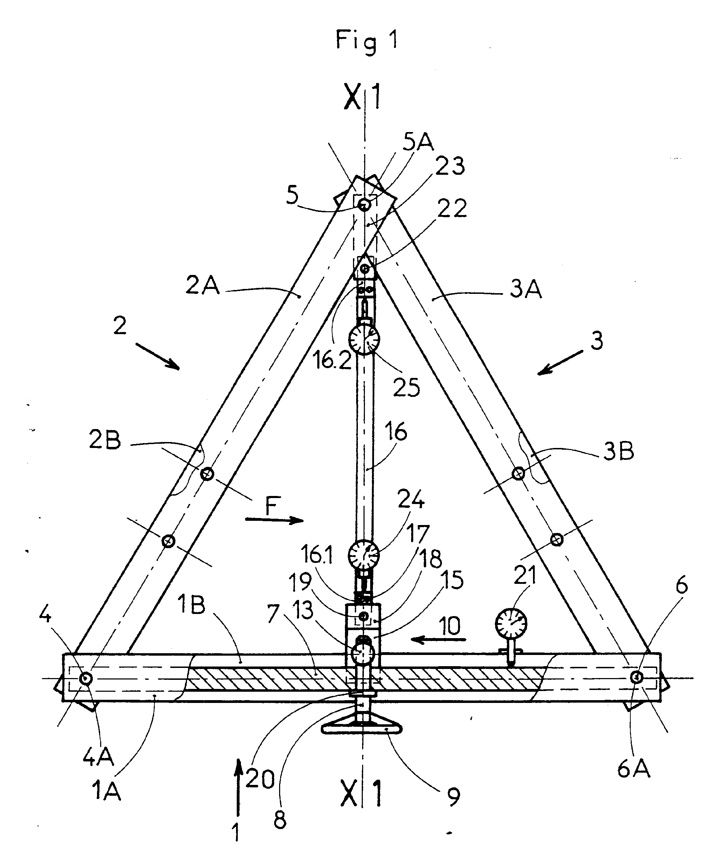

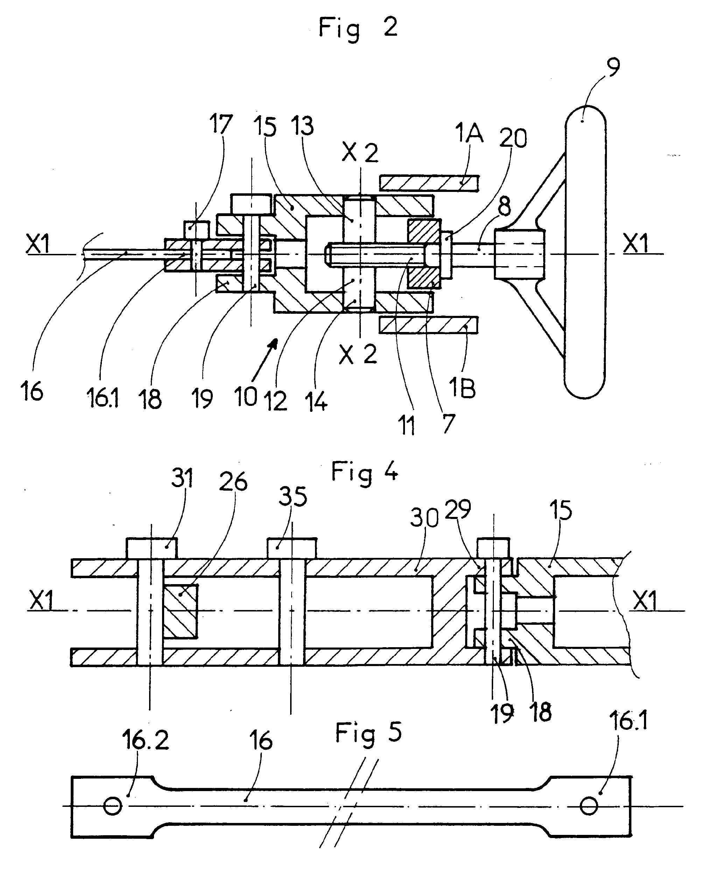

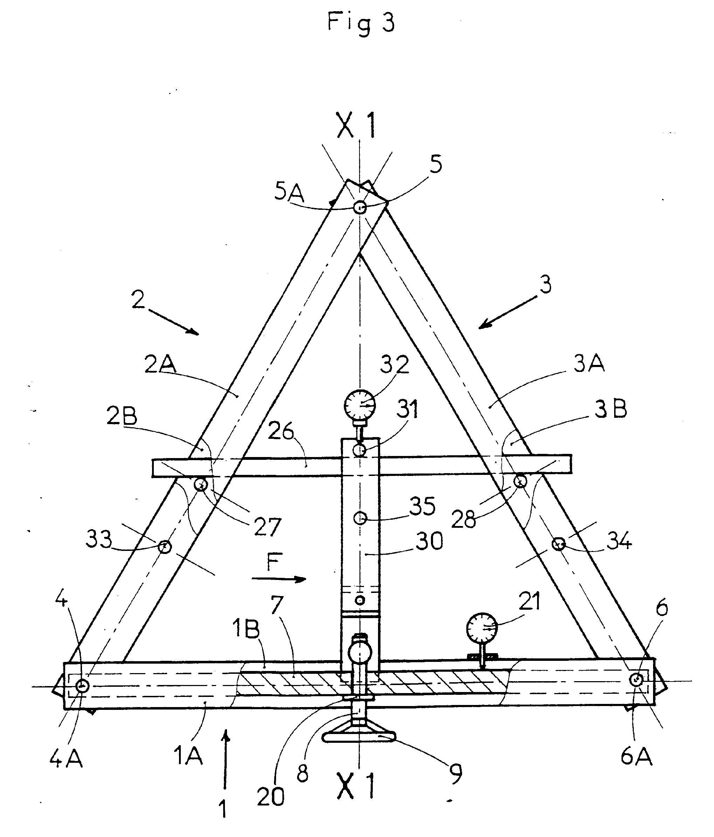

La figure 1 est une vue d'ensemble, de dessus, purement schématique, du dispositif suivant l'invention aménagé en banc de traction. Il comporte un châssis triangulaire apte à prendre appui sur un support plan horizontal, au moyen de trois pieds non représentés. Le châssis comprend trois côtés égaux 1, 2, 3 constitués chacun par deux fers plats, tels que 1A et 1B - voir figure 2 - disposés parallèlement, l'un au-dessus de l'autre, seuls les fers supérieurs 1A, 2A, 3A étant visibles sur la figure 1. Les fers sont maintenus à des écartements déterminés, grâce à des entretoises non représentées, placées aux trois sommets 4, 5, 6 du triangle, qui entourent les tiges de liaison 4A, 5A, 6A. Le côté 1 du châssis comporte une poutre dynamométrique 7, logée entre les deux fers plats 1A, 1B, placée sur chant. Les extrémités de cette poutre 7 sont percées de trous non représentés, traversés par les tiges de liaison 4A et 6A. Comme le montre la figure 2, cette poutre 7 est traversée en son milieu par la tige de mise en charge 8 entraînée en rotation par le volant 9. Cette tige 8 actionne le moyen de traction 10, constitué par un système vis-écrou, comprenant une vis 11, prolongeant la tige 8, engagée dans un écrou 12 ; cet écrou 12 est lui-même monté en rotation autour d'un axe X2-X2 par des pivots 13 et 14, engagés dans des portées réalisées dans l'étrier 15, qui constitue une tête de traction. On voit que la rotation du volant 9 permet d'effectuer une traction sur l'éprouvette 16, dont la tête 16-1 est reliée par le boulon 17 à la pièce de liaison 18, elle-même reliée à l'étrier 15 par la goupille 19. La force de traction exercée sur la tige de mise en charge 8 est transmise à la poutre dynamométrique 7 par l'épaulement 20 de la tige de mise en charge 8.

La déformation élastique de la poutre 7 qui en résulte, se traduit par une flèche qu'un comparateur mécanique 21, fixé au bord du fer plat inférieur 1B, permet de mesurer en un point déterminé de cette poutre dynamométrique 7. Grâce à un étalonnage préalable, la valeur de la flèche ainsi mesurée permet de connaître la force appliquée par la tige 8 au milieu de la poutre dynamométrique 7. L'extrémité de l'éprouvette de traction 16, éloignée de l'étrier 15, est munie d'une tête 16-2 reliée par le boulon 22 à une pièce de liaison 23, accrochée à la tige de liaison 5A du sommet 5 du châssis. Des comparateurs mécaniques 24, 25, portés par des bras fixes non représentés qui sont en appui sur le châssis, permettent de mesurer le déplacement des têtes 16-1, 16-2 de l'éprouvette 16 pendant l'essai de traction, en prenant appui sur les pièces de liaison 18 et 23.

On remarque qu'il est aussi possible de mesurer l'allongement de l'éprouvette 16 au moyen de jauges de déformation ou d'extensomètres. Dans le cas où les éprouvettes sont munies de jauges de déformation ou d'extensomètres, on soumet ces éprouvettes à des contraintes inférieures à leur limite élastique. Ces éprouvettes sont reliées le plus souvent par des moyens de liaison adaptés à la tête de traction 15 et à la pièce de liaison 23. On peut aussi substituer au moyen de traction 10 par vis et écrou, un autre moyen de traction, tel que par exemple, un vérin hydraulique. L'entraînement de la tige de mise en charge 8 peut être effectué par un système de motorisation au lieu du volant 9. Enfin, des jauges de déformation peuvent être utilisées pour mesurer la flexion de la poutre dynamométrique 7.

La figure 3 représente, de façon schématique, le dispositif suivant l'invention aménagé en banc de flexion. Pour cela, on met en oeuvre une éprouvette de flexion 26, de section parallélépipédique ou autre, dont on engage les extrémités entre les fers plats 2A, 2B et 3A, 3B des côtés 2 et 3 du châssis, de façon à les caler contre des butées, telles que 27, 28 qui orientent l'éprouvette parallèlement au côté 1 du châssis et déterminent la longueur de mesure entre appuis. On relie à la pièce de liaison 18 de l'étrier 15, la tête 29 - voir figure 4 - d'une chappe de flexion 30. Elle comporte au moins un plot de poussée 31 qui vient en appui contre l'éprouvette de flexion 26 à mi-distance des butées 27, 28. Ainsi, en effectuant la traction voulue sur l'étrier 15 par le volant 9, on déforme l'éprouvette 26 en flexion. On détermine la charge appliquée par mesure de la flèche de la poutre dynamométrique 7 au moyen du comparateur 21. On mesure la flexion de l'éprouvette 26 au moyen du comparateur 32 tenu par un bras fixe non représenté et solidaire du châssis. On peut, comme le montre la figure 3, faire cette mesure sur le plot de poussée 31. D'autres butées, telles que 33, 34, pour faire varier la distance entre appuis, peuvent être utilisées. On munit alors la chappe de flexion 30 d'un plot de poussée supplémentaire 35 convenablement placé.

D'autres types d'essais peuvent aussi être effectués au moyen de ce banc de flexion. On peut, en particulier, faire des essais de flexion sur éprouvette encastrée à une seule extrémité. Une telle éprouvette est alors montée parallèlement au côté 1 et encastrée par une seule de ses deux extrémités, dans un des deux côtés 2 ou 3 du châssis.

Bien que les exemples qui viennent d'être donnés concernent un châssis en forme de triangle équilatéral, on peut envisager pour certaines applications d'utiliser un châssis dont la longueur du côté 1 qui comporte la poutre dynamométrique 7, est différente de celle des deux autres.

De très nombreux autres types d'essais mécaniques peuvent enfin être effectués au moyen du banc suivant l'invention. De très nombreuses modifications peuvent être apportées à ce banc qui ne sortent pas du domaine de l'invention.

## Revendications

1. Dispositif permettant d'effectuer des essais mécaniques sur des éprouvettes, avec application sur celles-ci de charges déterminées, afin de mesurer la variation d'au moins une caractéristique dimensionnelle, caractérisé en ce qu'il comporte un châssis triangulaire dont l'un des côtés (1) est muni d'une poutre dynamométrique (7), qui lui est parallèle et reliée au châssis à chacune de ses extrémités, cette poutre étant reliée en son milieu, par l'intermédiaire d'un moyen de traction (10), à une tête de traction (15) qui permet d'exercer une force de traction réglable sur une éprouvette (16 ou 26) à laquelle elle est reliée de façon directe ou indirecte, cette éprouvette étant elle-même reliée au chassis de façon directe ou indirecte, des moyens de mesure de la flexion de la poutre dynamométrique (7) permettant de déterminer la force de traction appliquée à l'éprouvette.

2. Dispositif suivant revendication 1 caractérisé en ce que le moyen qui effectue la traction de la tête de traction (15), en prenant appui sur le milieu de la poutre dynamométrique (7), est un système vis-écrou (11, 12), commandé par un volant (9).

3. Dispositif suivant revendication 1 ou 2 caractérisé en ce qu'afin d'effectuer des essais de traction sur des éprouvettes (26) allongées, disposées suivant l'axe de traction, la tête de traction (15) comporte un moyen de liaison (18) permettant de saisir, de façon directe ou indirecte, l'une des deux extrémités de l'éprouvette (26) et en ce que l'autre extrémité de celle-ci est reliée, de façon directe ou indirecte à une tête de retenue (23), raccordée au sommet (5) du châssis opposé au côté (1), qui comporte la poutre dynamométrique (7).

4. Dispositif suivant l'une des revendications 1 à 3 caractérisé en ce que pour effectuer des essais de flexion sur une éprouvette (26) allongée, disposée parallèlement à la poutre dynamométrique, en intersectant les côtés (2, 3) du châssis, adjacents à celui (1) qui comporte cette poutre, la tête de traction (15) comporte un moyen de liaison (30) permettant de saisir, de façon directe ou indirecte, l'éprouvette (26) à son point d'intersection avec la droite (X1-X1), perpendiculaire à la poutre dynamométrique (7) et issue du sommet opposé (5) du châssis et en ce qu'une paire de moyens de butée (27, 28) est disposée sur les deux côtés (2, 3) du châssis, intersectés par l'éprouvette (26) de façon à assurer l'appui de celle-ci au cours de l'essai de flexion.

5. Dispositif suivant l'une des revendications 1 à 4 caractérisé en ce que le moyen de mesure de la flexion de la poutre dynamométrique (7) est un comparateur mécanique (21) qui permet de mesurer la flèche de la poutre dynamométrique par rapport au côté (1) du châssis qui en est muni.

6. Dispositif suivant l'une des revendications 1 à 3 caractérisé en ce que le moyen de mesure de l'allongement de l'éprouvette de traction (16) est au moins un comparateur mécanique (24, 25) qui permet de mesurer le déplacement d'au moins une extrémité de l'éprouvette par rapport au châssis.

7. Dispositif suivant revendication 4 caractérisé en ce que les moyens de mesure de la flexion de l'éprouvette (26) comprennent un comparateur mécanique (32).

8. Dispositif suivant l'une des revendications 1 à 7 caractérisé en ce que chaque côté du châssis est constitué par deux fers plats (1A, 1B), disposés parallèlement l'un au-dessus de l'autre et maintenus à distance voulue par des entretoises.

9. Dispositif suivant revendication 8 caractérisé en ce que la poutre dynamométrique (7) est logée entre les deux fers plats (1A, 1B) d'un côté (1) du châssis.

## Patentansprüche

1. Vorrichtung zum Durchführen von mechanischen Versuchen an Proben durch Anlegen von vorherbestimmten Lasten an die Proben, um die Veränderung von zumindest einer charakteristischen Abmessung zu messen, dadurch **gekennzeichnet**, daß sie einen dreiseitigen Rahmen umfaßt, dessen eine Seite mit einem Kraftmeßbalken (7) ausgerüstet ist, der parallel zu dieser angeordnet und mit seinen beiden Enden an dem Rahmen befestigt ist, wobei der Balken an seiner Mitte durch ein zwischengeschaltetes Zugmittel (10) mit dem Zugkopf (15) verbunden ist, der erlaubt, eine regelbare Zugkraft an die Probe (16, 26), mit welcher er direkt oder indirekt verbunden ist, anzulegen, wobei die Probe ihrerseits direkt oder indirekt mit dem Rahmen verbunden ist, und daß Mittel zum Messen der Biegung des Kraftmeßbalkens (7) gestatten, die an die Probe angelegte Zugspannung zu bestimmen.

2. Vorrichtung nach Anspruch 1, dadurch **gekennzeichnet**, daß das Mittel, welches das Ziehen des Zugkopfs (15) unter Abstützung auf der Mitte des Kraftmeßbalkens (7) durchführt, ein durch ein Drehrad (9) gesteuertes Schrauben-Mutter-System (11, 12) ist.

3. Vorrichtung nach Anspruch 1 oder 2, dadurch **gekennzeichnet**, daß zum Durchführen von Zugversuchen an länglichen Proben (26), die entlang der Zugachse angeordnet sind, der Zugkopf (15) ein Verbindungsmittel (18) umfaßt, das erlaubt, direkt oder indirekt eines der beiden Enden der Probe (26) zu ergreifen, und daß das andere Ende der Probe direkt oder indirekt mit einem Haltekopf (23) verbunden ist, der mit der Spitze (5) des Rahmens verbunden ist, die gegenüber der Seite (1) liegt, die den Kraftmeßbalken (7) trägt.

4. Vorrichtung nach einem der Ansprüche 1 bis 3, dadurch **gekennzeichnet**, daß zum Durchführen von Biegeversuchen an einer länglichen Probe (26), die parallel zum Kraftmeßbalken angeordnet ist und die Seiten (2, 3) des Rahmens überschneidet, die benachbart zu der Seite (1) sind, die den Balken trägt, der Zugkopf (15) ein Verbindungsmittel (30) umfaßt, das erlaubt, direkt oder indirekt die Probe (26) an ihrem Schnittpunkt mit der Linie (X1-X1) zu greifen, wobei diese Linie senkrecht zu dem Kraftmeßbalken (7) ist und von der diesem gegenüberliegenden Spitze (5) des Rahmens herkommt, und daß ein Paar von Anschlagmitteln (27, 28) auf den beiden Seiten (2, 3) des Rahmens angeordnet sind, die von der Probe (26) überschnitten werden, so daß der Halt der Probe während der Biegeversuche gesichert ist.

5. Vorrichtung nach einem der Ansprüche 1 bis 4, dadurch **gekennzeichnet**, daß das Mittel zum Messen der Verbiegung des Kraftmeßbalkens (7) ein mechanischer Komparator (21) ist, der erlaubt, das Verbiegen des Kraftmeßbalkens bezüglich der ihn enthaltenden Seite (1) des Rahmens zu messen.

6. Vorrichtung nach einem der Ansprüche 1 bis 3, dadurch **gekennzeichnet**, daß das Mittel zum Messen der Verlängerung der Zugprobe (16) zumindest ein mechanischer Komparator (24, 25) ist, der erlaubt, die Verschiebung von zumindest einem Ende der Probe bezüglich des Rahmens zu messen.

7. Vorrichtung nach Anspruch 4, dadurch **gekennzeichnet**, daß die Mittel zum Messen der Verbiegung der Probe (26) einen mechanischen Komparator (32) umfassen.

8. Vorrichtung nach einem der Ansprüche 1 bis 7, dadurch **gekennzeichnet,** daß jede Seite des Rahmens durch zwei flache Metallstäbe (1A, 1B) gebildet wird, die parallel, einer über dem anderen, angeordnet sind und durch Abstandshalter mit einem vorherbestimmten Abstand getrennt voneinander gehalten sind.

9. Vorrichtung nach Anspruch 8, dadurch **gekennzeichnet,** daß der Kraftmeßbalken (7) zwischen den beiden flachen Metallstäben (1A, 1B) an einer Seite (1) des Rahmens eingebaut ist.

## Claims

1. A device for mechanic testing items of probes by applying predetermined loads on said probes in order to measure the variation of at least one dimensional characteristic, characterized in that it includes a triangular framework, one side (1) of which is provided with a dynamometric beam (7) parallel thereto and connected to the framework at each of its ends, said beam being connected at its center through a traction means (10), to a pulling head (15) operable to apply an adjustable tensile force to a probe (16 or 26) to which said pulling head (15) is directly or indirectly connected, said probe being in turn directly or indirectly connected to said framework, wherein a means for measuring the deflection of said dynamometric beam (7) allows to determine the tensile force applied to said probe.

2. The device of claim 1, characterized in that the means (10) which pulls said pulling head (15) while abutting against the center of said dynamometric beam (7) is a bolt-screw system (11, 12) controlled by a wheel (9).

3. The device of claim 1 or 2, characterized in that said pulling head (15), in order to carry out tension tests on elongated probes (26) that are placed along the tension axis, includes a coupling element (18) for gripping, directly or indirectly, one of the two ends of said probe (26), and in that the other end thereof is directly or indirectly coupled to a holding head (23) that is connected to the framework vertex (5) opposite said side (1) that includes the dynamometric beam (7).

4. The device of any of claims 1 to 3, characterized in that, in order to carry out deflection tests on an elongated probe (26) placed parallel to said dynamometric beam (7) and crossing the framework's sides (2, 3) adjacent to said side (1) that includes said beam, said pulling head (15) includes a coupling element (30) for directly or indirectly gripping said probe (26) at its crossing point with the line (X1-X1) that is perpendicular to said dynamometric beam (7) and drawn from the opposite framework vertex (5), a pair of abutting elements (27, 28) being provided on both framework's sides (2, 3) that are crossed by said probe so as to ensure its holding during the deflection test.

5. The device of any of claims 1 to 4, characterized in that the means provided for measuring the deflection of said dynamometric beam (7) is a mechanical comparator (21) that allows to measure the deflection of said dynamometric beam (7) with respect to said side (1) of the framework including the beam.

6. The device of any of claims 1 to 3, characterized in that the means for measuring the elongation of said probe (16) is at least one mechanical comparator (24, 25) that allows to measure the displacement of at least one end of said probe with respect to the framework.

7. The device of claim 4, characterized in that the means for measuring the deflection of said probe (26) includes a mechanical comparator (32).

8. The device of any of claims 1 to 7, characterized in that each side of said framework is formed by two flat profiles (1A, 1B), parallel to each other and held apart at a predetermined distance by spacers.

9. The device of claim 8, characterized in that said dynamometric beam (7) is placed between said two flat profiles (1A, 1B) at one side (1) of said framework.
